# EUROPÄISCHE PATENTSCHRIFT

(11) **EP 1 547 219 B1**
(45) Veröffentlichungstag und Bekanntmachung des Hinweises auf die Patenterteilung: **01.02.2006**
(21) Anmeldenummer: 03757759.0
(22) Anmeldetag: 16.08.2003
(51) Int. Cl.: H02B 13/065

(54) **VERBINDUNGSMUFFE FÜR EINE SAMMELSCHIENENKUPPLUNG IN EINER GASISOLIERTEN SCHALTANLAGE**
CONNECTING SLEEVE FOR A BUS BAR CONNECTION IN A GAS-INSULATED SWITCHBOARD SYSTEM
MANCHON POUR COUPLAGE DES BARRES DANS UNE INSTALLATION DE DISTRIBUTION ETANCHE AUX GAZ

(30) Priorität: 05.10.2002 DE 10246557
(43) Veröffentlichungstag der Anmeldung: 29.06.2005
(73) Patentinhaber: Alstom, 75116 Paris (FR)
(72) Erfinder: STARCK, Thierry, 93105 Tegernheim (DE); RUHLAND, Siegfried, 93083 Obertraubling (DE)
(74) Vertreter: Dreiss, Fuhlendorf, Steimle & Becker
(86) Internationale Anmeldenummer: PCT/EP2003/009081
(87) Internationale Veröffentlichungsnummer: WO 2004/034535

(56) Entgegenhaltungen:
- EP-A- 1 111 748
- US-A- 4 074 193
- US-A- 5 323 117

## Beschreibung

Die Erfindung betrifft eine Verbindungsmuffe für eine Sammelschienenkupplung nach dem Oberbegriff des Anspruchs 1 sowie eine Sammelschienenkupplung und eine damit ausgestattete gasisolierte Schaltanlage, insbesondere eine gasisolierte Mittelspannungsanlage, nach dem Oberbegriff des entsprechenden nebengeordneten Anspruchs.

Bei Schaltanlagen mit gasisolierten Schaltfeldern oder mit anderen Modulen, die über Sammelschienenkupplungen miteinander verbunden sind, werden nicht nur an die elektrische Kontaktierung hohe Anforderungen gestellt, sondern auch an die Gasabdichtung selbst.

Im Bereich der Sammelschienenkupplung wird üblicherweise eine Verbindungsmuffe verwendet, die aus einem isolierendem, elastischen Material, oft aus einem Elastomer-Werkstoff, gefertigt ist und die schlauchförmig ausgeprägt ist, um die Sammelschienen sicher zu umschließen und gegen die Umgebung zu isolieren.

Aus der EP-A-1 111 748 ist eine Sammelschienenkupplung bekannt, die mit einer solchen isolierenden Verbindungsmuffe ("manchon isolant") ausgestattet ist.

Die Isoliereigenschaften können jedoch durch Teilentladungen verschlechtert werden und können im Laufe der Betriebszeit der Schaltanlage abnehmen. Für einen sicheren Betrieb sowie bereits zur Inbetriebnahme der Anlage müssen sogenannte TE-Messungen (TE: Teilentladung) durchgeführt werden, um mögliche Schädigungen am Isolierstoff zu erkennen und um die bestimmungsgemäße Montage zu gewährleisten. Neben optischen und Ultraschall-gestützten Verfahren ist eine übliche Methode die elektrische TE-Diagnose (nach IEC 60270), bei der über Mess-Sensoren, auch Koppelelektroden genannt, das zeitliche Auftreten der Teilentladungen überwacht und erfasst wird, wobei die gewonnenen Mess-Signale einer intensiven Signalanalyse unterzogen werden. Die Signalanalyse erfolgt in verschiednen Frequenzbereichen, die bis in GHz-Bereiche, also bis in UHF-Bereiche (UHF: Ultra High Frequency) gehen. Wird die Signalanalyse in diesen ultra-hohen Frequenzbereichen durchgeführt, so spricht man daher auch von UHF-TE-Diagnose.

Zur Erfassung der Mess-Signale wird üblicherweise ein UHF-Sensor (UHF-Koppelelektrode) in einem Gießharzteil integriert, das sich im Gasraum der Anlage befindet. Oder es wird über die Sammelschiene mit einem Spannungsabgriff versehen.

Diese bekannten Maßnahmen haben den Nachteil, dass zusätzliche Bauteile mit einem nicht zu vernachlässigendem Platzbedarf eingebaut werden müssen, was u.a. zusätzliche Kosten verursacht. Außerdem sind zur Verdrahtung der Sensoren und Spannungsabgriffe zusätzliche Abdichtungen erforderlich für die Ausleitung der Verdrahtung aus der Anlage. Zudem ist ein Austausch von Sensoren nur möglich bei Eingriff in den Gasraum der Anlage, was zusätzliche Gasarbeiten erforderlich macht.

Aufgabe der Erfindung ist es daher, eine Lösung dieser Probleme vorzuschlagen, die eine sichere und möglichst einfach zu handhabende UHF-TE-Diagnose an einer Sammelschienenkupplung für gasisolierte Schaltanlagen ermöglicht.

Gelöst wird die Aufgabe durch eine Verbindungsmuffe für eine Sammelschienenkupplung mit den Merkmalen des Anspruchs 1 sowie durch Sammelschienenkupplung und eine damit ausgestattete gasisolierte Schaltanlage mit den Merkmalen des entsprechenden nebengeordneten Anspruchs.

Demnach wird vorgeschlagen, dass die Verbindungsmuffe eine äußere, elektrisch leitende Oberfläche aufweist, die geerdet ist, und eine innere, elektrisch leitende Oberfläche aufweist, an der das Spannungspotential der Sammelschiene anliegt, und dass die Verbindungsmuffe eine in das isolierende Material eingebettete Koppelektrode aufweist.

Durch diese Maßnahmen wird eine sehr zuverlässige Messanordnung geschaffen, bei der der Sensor (Koppelelektrode) sich außerhalb des Gasraumes der Anlage befindet, was wiederum keine Gasarbeit beim Austausch des Sensors erfordert. Bei dieser Gestaltung der Verbindungsmuffe und Anordnung des Sensors ist die primäre Kapazität der Koppelelektrode zur Sammelschiene abhängig von der Fläche der Elektrode und dem Abstand zur inneren Leitschicht (innere, elektrisch leitende Oberfläche). Daher kann die primäre Kapazität recht groß ausgelegt werden ohne die Spannungsfestigkeit der Muffe zu beeinflussen. Somit kann eine hohe Teilentladungs-Empfindlichkeit des Sensors (Koppelelektrode) erzielt werden.

Besonders vorteilhafte Ausgestaltungen der Erfindung ergeben sich aus den Unteransprüchen.

Demnach ist es besonders vorteilhaft, wenn die Koppelelektrode eine Sensorfläche aufweist, die tangential zur äußeren Oberfläche ausgerichtet ist. Dadurch wird vermieden, dass eine die UHF-TE-Messung beeinträchtige Felderhöhung im Bereich der Elektrode entstehen könnte.

In diesem Zusammenhang ist es auch vorteilhaft, wenn die Koppelelektrode in das isolierende Material so eingebettet ist, dass die Koppelelektrode von der inneren Oberfläche und von der äußeren Oberfläche elektrisch isoliert ist, und wenn die Koppelelektrode einen Randbereich aufweist, der zumindest zum Teil mit der äußeren Oberfläche überlappend ausgerichtet ist.

Außerdem ist es von besonderem Vorteil, wenn die Koppelelektrode mit einem Steckverbinderelement verbunden ist, das sich in einer Aussparung befindet, die von dem isolierenden Material umgeben ist. In diesem Zusammenhang ist es vorteilhaft, wenn zudem das Steckverbinderelement mit einem Gegenelement verbindbar ist, und dass die Aussparung an die äußere Form dieses Gegenelements für eine staub- und feuchtigkeitsdichte Steckverbindung angepasst ist. Durch diese Maßnahmen wird eine sichere und einfach zu handhabende Anschlussmöglichkeit für Messgeräte, insbesondere für Spannungsanzeigegeräte und Spektrum Analyzer, geschaffen.

Im Folgenden werden nun die Erfindung und die sich daraus ergebenden Vorteile anhand eines Ausführungsbeispieles und unter Zuhilfenahme der beiliegenden schematischen Zeichnungen näher beschrieben:
- Figur 1,: die eine Sammelschienenkupplung mit einer erfindungsgemäßen Verbindungsmuffe in einer Querschnittsdarstellung zeigt; und
- Figur 2,: die die erfindungsgemäße Verbindungsmuffe selbst in einer anderen Querschnittsdarstellung zeigt.

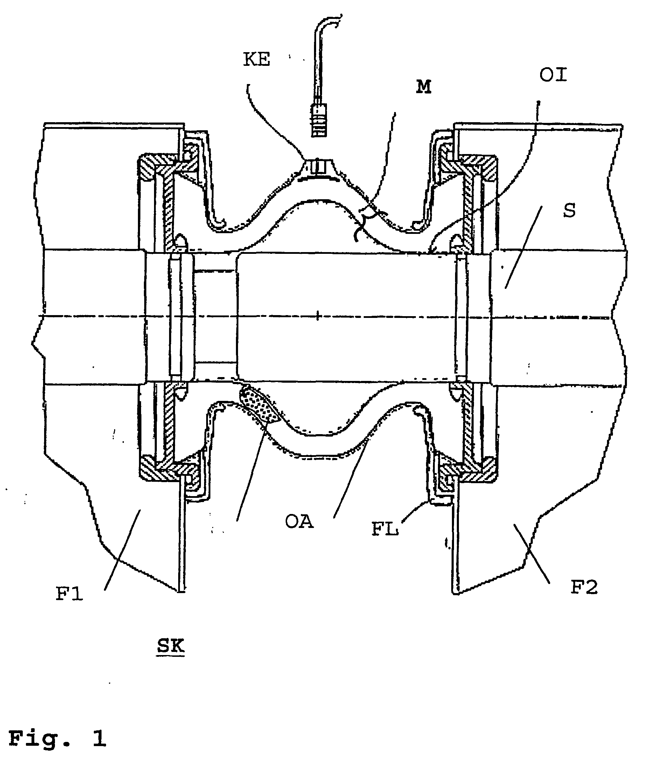

In der Figur 1 ist im Querschnitt eine Sammelschienenkupplung SK dargestellt, die zwei ausschnittsweise dargestellte Schaltfelder F1 und F2 (linke bzw. rechte Bildhälfte) miteinander verbinden soll.

In den Gasbehältern der beiden Schaltfelder F1 und F2 befinden sich Sammelschienenrohre S, die jeweils mit einem Ende aus dem Behälter heraus ragen, damit sie über die Sammelschienenkupplung SK miteinander verbunden werden können. Dazu sind die Sammelschienenrohre S koaxial zueinander ausgerichtet und ihre Enden ragen jeweils aus einer mit Dichtungsringen (sogenannten O-Ringen) abgedichteten Durchführung heraus. Alle Durchführungen befinden sich jeweils an einem Behälterdurchzug und sind mittels Dichtungsringen gegen ein Entweichen von Isoliergas abgedichtet. Das eine Sammelschienenrohr S des zweiten Schaltfeldes F2 (rechte Bildhälfte) ragt dabei aus seiner Durchführung weiter heraus, als das entsprechende Gegenstück des ersten Sammelschienenrohres (linke Bildhälfte).

Um die miteinander verkoppelten Stromschienenenden (Enden der Sammelschienenrohre S) herum erstreckt sich eine Verbindungsmuffe M, die schlauchartig ausgeprägt ist und aus einem elastischen Isoliermaterial I, vorzugsweise aus einem Elastomer-Material, besteht. Die Muffe M ist mittels Flansche FL an die Außenwände der Schaltfelder F1 und F2 befestigt und ummantelt die aus den Schaltfeldern herausragenden Stromschienenteile. Durch diese Muffe M wird die Verbindung gegenüber der Umgebung elektrisch isoliert und geschützt.

Erfindungsgemäß hat die Muffe M eine innere leitende Fläche OI, die elektrisch mit der Sammelschiene S kontaktiert und somit deren Spannungspotential an dieser Innenfläche OI anliegt. Außerdem hat die Muffe M eine äußere Fläche OA, die ebenfalls elektrisch leitend ist. Diese Außenfläche OA ist über die Flansche und die Gasbehälterwandungen der Schaltfelder F1 und F2 geerdet.

Zur Erfassung von Messsignalen im Rahmen von TE-UHF-Messungen ist im mittleren Bereich der Verbindungsmuffe M ein Sensor in Form einer Koppelelektrode KE eingelassen. Die Koppelelektrode KE befindet sich im Isoliermaterial I und ist als konkav gewölbte Fläche ausgebildet, die tangential zur Außenfläche OA ausgerichtet ist. Die Koppelelektrode kann aus einem leitenden Material oder auch aus einem halbleitenden Kunststoff bestehen. An der Koppelelektrode KE ist ein Kontaktstift angebracht, der Teil einer Steckverbinderkupplung ist, die sich in einer Aussparung befindet und somit von außen über einen passenden Stecker (Gegenstück zur Kupplung) mit einem Messgerät verbunden werden kann.

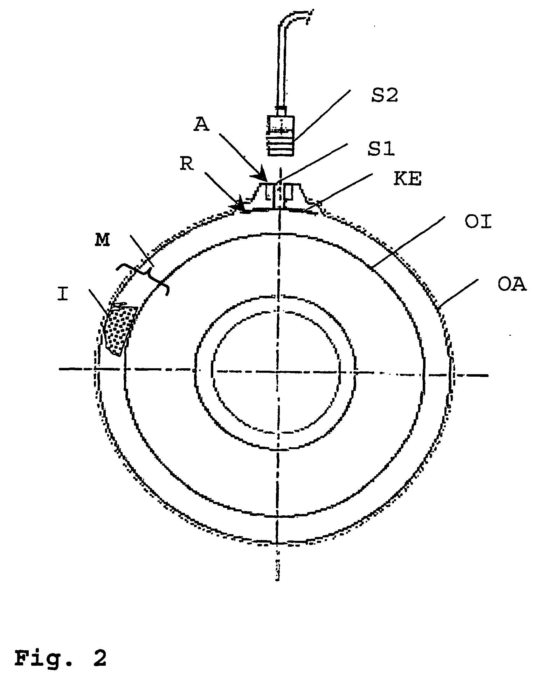

Die Figur 2 zeigt in einer anderen Querschnittdarstellung die Muffe M und noch genauer die darin integrierte Koppelelektrode KE.

Wie dort zu sehen ist, ist die Koppelelektrode KE selbst in das Isoliermaterial I eingelassen, wobei die Sensorfläche an ihren Randbereichen R mit der Außenfläche OA der Muffe M überlappt. Dabei ist die Elektrode KE durch eine dünne Schicht Isoliermaterial I von der geerdeten Außenfläche OA getrennt. Dadurch und durch die tangentiale Ausrichtung der Sensorfläche entsteht keine nennenswerte Felderhöhung im Bereich der Elektrode. Das hat den Vorteil, dass die primäre Kapazität der Koppelelektrode KE zur Sammelschiene S abhängig ist von der Sensorfläche der Elektrode KE und von dem Abstand zur Innenfläche OI. Die primäre Kapazität kann daher sehr großzügig ausgelegt werden, ohne dass eine Beeinträchtigung der Spannungsfestigkeit der Muffe M auftreten kann. Dadurch kann schließlich eine hohe Teilentladungsempfindlichkeit des Sensors KE erzielt werden.

Der Kontakt mit dem Sensor KE erfolgt über den Steckkontakt S1, der sich in der Aussparung A der Muffe M befindet und somit eine Steckbuchse bildet, in die das Gegenstück, der Stecker S2, passgenau und staub- und wasserdicht eingeführt werden kann. Da also der Sensor KE von außen zugänglich ist und sich außerhalb des Gasraumes befindet, ist nicht nur die Herstellung einer Messverbindung sehr einfach, sondern auch ein evtl. vorzunehmender Austausch des Sensors KE kann ohne Gasarbeit durchgeführt werden.

Die ganze Anordnung enthält nur wenige und kostengünstige Bauteile. Es sind keine zusätzlichen Dichtungen oder dergleichen mehr erforderlich. Auch besteht kein zusätzlicher Platzbedarf.

Daher ist die vorgeschlagene Anordnung sehr gut zum Einsatz in gasisolierten Schaltanlagen geeignet. Aber auch andere Einsatzmöglichkeiten sind denkbar, so etwa im Bereich der Leistungstransformatoren etc..

## Patentansprüche

1. Verbindungsmuffe (M) für eine Sammelschienenkupplung (SK) zum Verbinden zweier Schaltfelder (F1, F2) einer gasisolierten Schaltanlage, bei der die Verbindungsmuffe (M) aus einem isolierendem, elastischen Material (I) gefertigt und schlauchförmig ausgeprägt ist,
**dadurch gekennzeichnet, dass**
die Verbindungsmuffe (M) eine äußere, elektrisch leitende Oberfläche (OA) aufweist, die geerdet ist, und eine innere, elektrisch leitende Oberfläche (OI) aufweist, an der das Spannungspotential der Sammelschiene (S) anliegt, und dass die Verbindungsmuffe (M) eine in das isolierende Material (I) eingebettete Koppelektrode (KE) aufweist.

2. Verbindungsmuffe (M) nach Anspruch 1, **dadurch gekennzeichnet, dass** die Koppelelektrode (KE) eine Sensorfläche aufweist, die tangential zur äußeren Oberfläche (OA) ausgerichtet ist.

3. Verbindungsmuffe (M) nach Anspruch 1 oder 2, **dadurch gekennzeichnet, dass** die Koppelelektrode (KE) in das isolierende Material (I) so eingebettet ist, dass die Koppelelektrode (KE) von der inneren Oberfläche (OI) und von der äußeren Oberfläche (OA) elektrisch isoliert ist, wobei die Koppelelektrode (KE) einen Randbereich (R) aufweist, der zumindest zum Teil mit der äußeren Oberfläche (02) überlappend ausgerichtet ist.

4. Verbindungsmuffe (M) nach Anspruch 1, **dadurch gekennzeichnet, dass** die Koppelelektrode (KE) mit einem Steckverbinderelement (S1) verbunden ist, das sich in einer Aussparung (A) befindet, die von dem isolierenden Material (I) umgeben ist.

5. Verbindungsmuffe (M) nach Anspruch 4, **dadurch gekennzeichnet, dass** das Steckverbinderelement (S1) mit einem Gegenelement (S2) verbindbar ist, und dass die Aussparung (A) an die äußere Form dieses Gegenelements (S2) für eine staubdichte Steckverbindung angepasst ist.

6. Sammelschienenkupplung (SK) mit einer Verbindungsmuffe (M) zum Verbinden zweier Schaltfelder (F1, F2) einer gasisolierten Schaltanlage, bei der die Verbindungsmuffe (M) aus einem isolierendem, elastischen Material (I) gefertigt und schlauchförmig ausgeprägt ist,
**dadurch gekennzeichnet, dass**
die Verbindungsmuffe (M) eine äußere, elektrisch leitende Oberfläche (OA) aufweist, die geerdet ist, und eine innere, elektrisch leitende Oberfläche (OI) aufweist, an der das Spannungspotential der Sammelschiene (S) anliegt, und dass die Verbindungsmuffe (M) eine in das isolierende Material (I) eingebettete Koppelelektrode (KE) aufweist.

7. Gasisolierte Schaltanlage, insbesondere gasisolierte Mittelspannungsschaltanlage, mit mindestens zwei Schaltfeldern (F1, F2), die über eine eine Verbindungsmuffe (M) aufweisende Sammelschienenkupplung (SK) miteinander verbunden sind, wobei die Verbindungsmuffe (M) aus einem isolierendem, elastischen Material (I) gefertigt und schlauchförmig ausgeprägt ist,
**dadurch gekennzeichnet, dass**
die Verbindungsmuffe (M) eine äußere, elektrisch leitende Oberfläche (OA) aufweist, die geerdet ist, und eine innere, elektrisch leitende Oberfläche (OI) aufweist, an der das Spannungspotential der Sammelschiene (S) anliegt, und dass die Verbindungsmuffe (M) eine in das isolierende Material (I) eingebettete Koppelelektrode (KE) aufweist.

## Revendications

1. Manchon (M) pour couplage de barres (SK) destiné à relier deux panneaux de couplage (F1, F2) d'une installation de distribution étanche aux gaz, dans lequel le manchon (M) est fabriqué dans un matériau isolant élastique (I) et configuré en forme de tuyau, **caractérisé en ce que** le manchon (M) présente une surface extérieure électriquement conductrice (OA) qui est mise à la terre et une surface intérieure électriquement conductrice (OI) sur laquelle repose le potentiel de tension de la barre (S), et **en ce que** le manchon (M) présente une électrode de couplage (KE) encastrée dans le matériau isolant (I).

2. Manchon (M) selon la revendication 1, **caractérisé en ce que** l'électrode de couplage (KE) présente une surface de capteur qui est orientée tangentiellement à la surface extérieure (OA).

3. Manchon (M) selon la revendication 1 ou 2, **caractérisé en ce que** l'électrode de couplage (KE) est encastrée dans le matériau isolant (I) de telle manière que l'électrode de couplage (KE) est isolée électriquement de la surface intérieure (OI) et de la surface extérieure (OA), l'électrode de couplage (KE) présentant une zone de bordure (R) qui est orientée au moins en partie en se chevauchant avec la surface extérieure (OA).

4. Manchon (M) selon la revendication 1, **caractérisé en ce que** l'électrode de couplage (KE) est reliée à un élément de connecteur (S1) qui se trouve dans un évidement (A) qui est entouré par le matériau isolant (I).

5. Manchon (M) selon la revendication 4, **caractérisé en ce que** l'élément de connecteur (S1) peut être relié à un élément opposé (S2) et **en ce que** l'évidement (A) est adapté à la forme extérieure de cet élément opposé (S2) pour une fiche de raccordement étanche aux poussières.

6. Couplage de barres (SK) comprenant un manchon (M) destiné à relier deux panneaux de couplage (F1, F2) d'une installation de distribution étanche aux gaz, dans lequel le manchon (M) est fabriqué dans un matériau isolant élastique et configuré en forme de tuyau, **caractérisé en ce que** le manchon (M) présente une surface extérieure électriquement conductrice (OA) qui est mise à la terre et une surface intérieure électriquement conductrice (OI) sur laquelle repose le potentiel de tension de la barre (S) et **en ce que** le manchon (M) présente une électrode de couplage (KE) encastrée dans le matériau isolant (I).

7. Installation de distribution étanche aux gaz, en particulier installation de distribution moyenne tension étanche aux gaz, comprenant au moins deux panneaux de couplage (F1, F2) qui sont reliés entre eux par l'intermédiaire d'un couplage de barres (SK) présentant un manchon (M), le manchon (M) étant fabriqué dans un matériau isolant élastique (I) et configuré en forme de tuyau, **caractérisé en ce que** le manchon (M) présente une surface extérieure électriquement conductrice (OA) qui est mise à la terre et une surface intérieure électriquement conductrice (OI) sur laquelle repose le potentiel de tension de la barre (S) et **en ce que** le manchon (M) présente une électrode de couplage (KE) encastrée dans le matériau isolant (I).

## Claims

1. Connecting sleeve (M) for a bus bar coupling (SK) for connecting two switch panels (F1, F2) of a gas-insulated substation, in which the connecting sleeve (M) is produced from insulating, resilient material (I) and is tubular, **characterized in that** the connecting sleeve (M) has an outer, electrically conductive surface (OA) which is earthed, and an inner, electrically conductive surface (OI) to which the voltage potential of the bus bar (S) is applied, and **in that** the connecting sleeve (M) has a coupling electrode (KE) embedded in the insulating material (I).

2. Connecting sleeve (M) according to Claim 1, **characterized in that** the coupling electrode (KE) has a sensor surface which is oriented tangentially to the outer surface (OA).

3. Connecting sleeve (M) according to Claim 1 or 2, **characterized in that** the coupling electrode (KE) is embedded in the insulating material (I) in such a way that the coupling electrode (KE) is electrically insulated from the inner surface (OI) and from the outer surface (OA), the coupling electrode (KE) having an edge region (R) which is oriented so as to at least partly overlap the outer surface (02).

4. Connecting sleeve (M) according to Claim 1, **characterized in that** the coupling electrode (KE) is connected to a plug connector element (S1) which is present in a recess (A) which is surrounded by the insulating material (I).

5. Connecting sleeve (M) according to Claim 4, **characterized in that** the plug connector element (S1) can be connected to an opposite element (S2), and **in that** the recess (A) is adapted to the outer shape of this opposite element (S2) for a dust-tight plug connection.

6. Bus bar coupling (SK) comprising a connecting sleeve (M) for connecting two switch panels (F1, F2) of a gas-insulated substation, in which the connecting sleeve (M) is produced from an insulating, resilient material (I) and is tubular, **characterized in that** the connecting sleeve (M) has an outer, electrically conductive surface (OA), which is earthed, and an inner, electrically conductive surface (OI) to which the voltage potential of the bus bar (S) is applied, and **in that** the connecting sleeve (M) has a coupling electrode (KE) embedded in the insulating material (I).

7. Gas-insulating substation, in particular gas-insulated medium-voltage substation, comprising at least two switch panels (F1, F2) which are connected to one another via a bus bar coupling (SK) having a connecting sleeve (M), the connecting sleeve (M) being produced from an insulating, resilient material (I) and being tubular, **characterized in that** the connecting sleeve (M) has an outer, electrically conductive surface (OA), which is earthed, and an inner, electrically conductive surface (OI) to which the voltage potential of the bus bar (S) is applied, and **in that** the connecting sleeve (M) has a coupling electrode (KE) embedded in the insulating material (I).
